# EUROPEAN PATENT SPECIFICATION

(11) **EP 3 614 714 B1**
(45) Date of publication and mention of the grant of the patent: **07.07.2021**
(21) Application number: 17907540.3
(22) Date of filing: 28.04.2017
(51) Int. Cl.: H04W 12/08

(54) **METHOD FOR ACQUIRING CONTEXT CONFIGURATION INFORMATION, TERMINAL DEVICE AND ACCESS NETWORK DEVICE**
VERFAHREN ZUR ERFASSUNG VON KONTEXTKONFIGURATIONSINFORMATIONEN, ENDGERÄT UND ZUGANGSNETZWERKVORRICHTUNG
PROCÉDÉ POUR ACQUÉRIR DES INFORMATIONS DE CONFIGURATION DE CONTEXTE, DISPOSITIF TERMINAL ET DISPOSITIF DE RÉSEAU D'ACCÈS

(43) Date of publication of application: 26.02.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN); YANG, Ning, Dongguan, Guangdong 523860 (CN)
(74) Representative: Manitz Finsterwald Patent- und Rechtsanwaltspartnerschaft mbB
(86) International application number: PCT/CN2017/082534
(87) International publication number: WO 2018/195971

(56) References cited:
- CN-A- 103 733 658
- CN-A- 104 144 524
- GB-A- 2 455 707
- US-A1- 2013 182 563

## Description

### TECHNICAL FIELD

The disclosure relates to the field of communication, and more particularly, to a method for acquiring context configuration information, a terminal device and an access network device.

### BACKGROUND

When a terminal device is in some specific states, for example, an inactive state, or a suspended state or a lightly connected state, the terminal device is not required to notify a network device during movement in a pre-configured paging region. The paging region may include one or more access network devices in which one access network device is an anchor access network device, and the anchor access network device stores context configuration information of terminal devices and may also store information such as a connection configuration between the access network device and a core network device. When the terminal device needs to send uplink data the terminal device may initiate a connection recovery request message to any access network device in the paging region where the terminal device resides, for performing data transmission of the terminal device and the access network device.

However, when the terminal device sends the connection recovery request message to the access network device in the region where the terminal device resides and if the access network device does not have the context configuration information of the terminal device, it is impossible to implement connection recovery.

US2013/182563A1 discloses a method of enhanced connection recovery and loss-less data recovery.

GB2455707A discloses radio link failure recovery.

### SUMMARY

The disclosure provides a method for acquiring context configuration information, a terminal device and an access network device, which may implement connection recovery or establishment of a terminal device and an access network device.

The invention is defined by the independent claims.

A first aspect provides a method for acquiring context configuration information, which may include that: a terminal device determines a connection recovery request message, the connection recovery request message being used for the terminal device to request for recovering or establishing a connection with an access network device, the connection recovery request message including network node information, the network node information being used to indicate a network node, the network node storing context configuration information of all terminal devices within coverage of the network node and the terminal device being within the coverage of the network node; and the terminal device sends the connection recovery request message to the access network device.

Thus, according to the method for acquiring the context configuration information in embodiments of the disclosure, the terminal device may send the connection recovery request message to any access network device in a paging region where it is located, the connection recovery request message containing the network node information, and then the access network device may acquire the context configuration information of the terminal device from the network node according to the network node information. Therefore, connection recovery or establishment of the access network device and the terminal device is implemented.

It is to be understood that, when the terminal device is in a specific state, for example, the terminal device is in an inactive state, or a suspended state or a lightly connected state, and if the terminal device is required to send uplink data, the terminal device may determine the connection recovery request message and send the connection recovery request message to the access network device to request for connection recovery or establishment.

It is to be understood that the terminal device may initiate the connection recovery request message to any access network device in the paging region where it resides. Herein, the paging region may be a paging region pre-configured for the terminal device by a core network device, the paging region may include one or more access network devices in which one access network device is an anchor access network device, and the anchor access network device stores context configuration information of all the terminal devices in the paging region.

In combination with the first aspect and the above implementation thereof, in another implementation of the first aspect, the network node may be an anchor access network device or a core network device.

In combination with the first aspect, in an implementation of the first aspect, the network node information may be an identifier of the network node.

For example, if the network node is an anchor access network device, the network node information may be information of the anchor access network device, for example, an identifier of the anchor access network device.

In combination with the first aspect and the above implementations thereof, in another implementation of the first aspect, the network node information may include an identifier of a paging region where the terminal device is located, and the paging region may form a corresponding relationship with the network node.

For example, the identifier of the paging region may be a Residential Access Network (RAN).

In combination with the first aspect and the above implementations thereof, in another implementation of the first aspect, the method may further include that: the terminal device receives the network node information sent by the network node.

In combination with the first aspect and the above implementations thereof, in another implementation of the first aspect, after the operation that the terminal device sends the connection recovery request message to the access network device, the method may further include that: the terminal device recovers or establishes the connection with the access network device.

A second aspect provides a method for acquiring context configuration information, which may include that: an access network device receives a connection recovery request message sent by a terminal device, the connection recovery request message including network node information and the connection recovery request message being used for the terminal device to request for recovering or establishing a connection with the access network device; the access network device determines a network node according to the network node information, the network node being used to store context configuration information of all terminal devices within coverage of the network node, the terminal device being within the coverage of the network node and the context configuration information being used for the access network device to recover or establish the connection with the terminal device; and the access network device acquires the context configuration information from the network node.

Thus, according to the method for acquiring the context configuration information in the embodiments of the disclosure, the terminal device may send the connection recovery request message to any access network device in a paging region where it is located, the connection recovery request message containing the network node information, and then the access network device may acquire the context configuration information of the terminal device from the network node according to the network node information. Therefore, connection recovery or establishment of the access network device and the terminal device is implemented.

In combination with the second aspect, in an implementation of the second aspect, the network node information may be an identifier of the network node.

In combination with the second aspect and the above implementation thereof, in another implementation of the second aspect, the network node information may include an identifier of a paging region where the terminal device is located, and the operation that the access network device determines the network node according to the network node information may include that: the access network device determines the network node corresponding to the paging region according to the network node information and a correspondence between the paging region and the network node.

In combination with the second aspect and the above implementations thereof, in another implementation of the second aspect, the network node may be an anchor access network device or a core network device.

A third aspect provides a terminal device, which is configured to execute the method in the first aspect or any possible implementation of the first aspect. Specifically, the terminal device includes units configured to execute the method in the first aspect or any possible implementation of the first aspect.

A fourth aspect provides an access network device, which is configured to execute the method in the second aspect or any possible implementation of the second aspect. Specifically, the access network device includes units configured to execute the method in the second aspect or any possible implementation of the second aspect.

A fifth aspect provides a terminal device, which includes a storage unit and a processor. The storage unit is configured to store an instruction. The processor is configured to execute the instruction stored in a memory. When the processor executes the instruction stored in the memory, such execution enables the processor to execute the method in the first aspect or any possible implementation of the first aspect.

A sixth aspect provides an access network device, which includes a storage unit and a processor. The storage unit is configured to store an instruction. The processor is configured to execute the instruction stored in a memory. When the processor executes the instruction stored in the memory, such execution enables the processor to execute the method in the second aspect or any possible implementation of the second aspect.

A seventh aspect provides a computer-readable medium, which is configured to store a computer program, the computer program including an instruction configured to execute the method in the first aspect or any possible implementation of the first aspect.

An eighth aspect provides a computer-readable medium, which is configured to store a computer program, the computer program including an instruction configured to execute the method in the second aspect or any possible implementation of the second aspect.

### BRIEF DESCRIPTION OF DRAWINGS

FIG. 1 is a schematic flowchart of a method for acquiring context configuration information according to an embodiment of the disclosure.
FIG. 2 is another schematic flowchart of a method for acquiring context configuration information according to an embodiment of the disclosure.
FIG. 3 is a schematic block diagram of a terminal device according to an embodiment of the disclosure.
FIG. 4 is a schematic block diagram of an access network device according to an embodiment of the disclosure.
FIG. 5 is another schematic block diagram of a terminal device according to an embodiment of the disclosure.
FIG. 6 is another schematic block diagram of an access network device according to an embodiment of the disclosure.

### DETAILED DESCRIPTION

The technical solutions in the embodiments of the disclosure will be described below in combination with the drawings.

It is to be understood that the technical solutions of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system, and a future 5th-Generation (5G) communication system.

Various embodiment of the disclosure are described in combination with a terminal device. The terminal device may also refer to User Equipment (UE), an access terminal, a user unit, a user station, a mobile radio station, a mobile station, a remote station, a remote terminal, a mobile device, a user terminal, a terminal, a wireless communication device, a user agent, a user device or the like. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a future 5G network, a terminal device in a future evolved Public Land Mobile Network (PLMN) or the like.

Various embodiment of the disclosure are described in combination with an access network device. The access network device may be a device configured to communicate with the terminal device, for example, may be a Base Transceiver Station (BTS) in the GSM or the CDMA, may also be a NodeB (NB) in the WCDMA system and may also be an Evolutional Node B (eNB or eNodeB) in the LTE system. Or the access network device may be a relay station, an access point, a vehicle-mounted device, a wearable device, an access network device in the future 5G network, an access network device in the future evolved PLMN or the like.

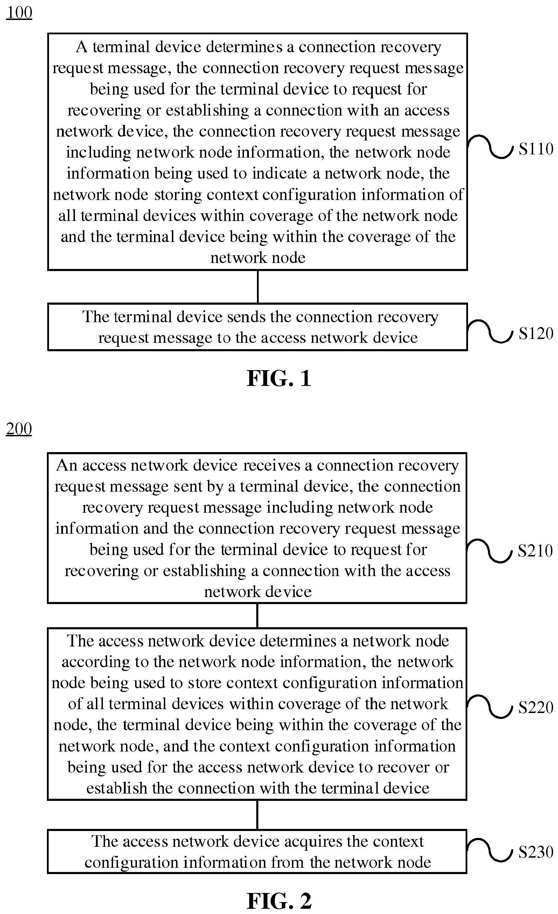

FIG. 1 is a schematic flowchart of a method 100 for acquiring context configuration information according to an embodiment of the disclosure. Specifically, the method 100 may be executed by a terminal device. As shown in FIG. 1, the method 100 includes the following steps.

In S110, the terminal device determines a connection recovery request message. The connection recovery request message is used for the terminal device to request for recovering or establishing a connection with an access network device. The connection recovery request message includes network node information. The network node information is used to indicate a network node. The network node stores context configuration information of all terminal devices within coverage of the network node. The terminal device is within the coverage of the network node.

In S120, the terminal device sends the connection recovery request message to the access network device.

Specifically, when a terminal is in a specific state, for example, an inactive state, or a suspended state or a lightly connected state, if the terminal needs to transmit uplink data, the terminal sends the connection recovery request message to the access network device in a paging region where it is located. The connection recovery request message is used for the terminal device to request for recovering the connection or establishing the connection with the access network device. The connection recovery request message may include the network node information such that the access network device may receive the connection recovery request message and determine the network node according to the network node information therein. The network node stores the context configuration information of all the terminal devices within the coverage of the network node, the terminal device being within the coverage of the network node. Then, the access network device may acquire the context configuration information of the terminal device from the network node, and the access network device recovers or establishes the connection with the terminal device for data transmission according to the context configuration information.

Thus, according to the method for acquiring the context configuration information in the embodiment of the disclosure, the terminal device may send the connection recovery request message to any access network device in a paging region where it is located, the connection recovery request message containing the network node information, and then the access network device may acquire the context configuration information of the terminal device from the network node according to the network node information. Therefore, connection recovery or establishment of the access network device and the terminal device is implemented.

In S110, when the terminal device is in a specific state and the terminal device is required to send the uplink data, the terminal device determines the connection recovery request message. The specific state may refer to, for example, the inactive state, or suspended state or lightly connected state of the terminal device. The embodiment of the disclosure is not limited thereto.

In S120, the terminal device sends the connection recovery request message to the access network device.

In the embodiment of the disclosure, when the terminal device is in the specific state, if the terminal device needs to send the uplink data, the terminal device may initiate the connection recovery request message to any access network device in the paging region where it resides. The connection recovery request message is used for the terminal device to request for recovering the connection or establishing the connection with the access network device such that the terminal device may recover or establish the connection with the access network device for data transmission.

Herein, the paging region may be a paging region pre-configured for the terminal device by a core network device, the paging region may include one or more access network devices in which one access network device is an anchor access network device, and the anchor access network device stores context configuration information of all the terminal devices in the paging region and may also store information such as a connection configuration between the anchor access network device and the core network device.

In the embodiment of the disclosure, the terminal device sends the connection recovery request message to the access network device, the connection recovery request message includes the network node information, and the network node information may be configured for the access network device to acquire the context configuration information of the terminal device. Specifically, the access network device receives the connection recovery request message and may determine the network node according to the network node information in the connection recovery request message, the context configuration information of the terminal device is stored in the network node, and the access network device may acquire the context configuration information of the terminal device from the network node. The terminal device is within the coverage of the network node, and the network node stores the context configuration information of all the terminal devices within the coverage of the network node.

It is to be understood that the network node information may be configured for the terminal device by the network node. That is, the terminal device may receive the network node information sent by the network node.

Specifically, the network node information in the connection recovery request message is configured to indicate the network node, the network node stores the context configuration information of the terminal device, the network node may be a core network device, or the network node may also be an anchor access network device in the paging region where the terminal device is located. When the network node is an anchor access network device, the terminal device belongs to a coverage area of the anchor access network device, i.e., the paging region where the terminal device is located, and the anchor access network device stores the context configuration information of all the terminal devices in the paging region. When the network node is a core network device, the terminal device belongs to a coverage area of the core network device, and similarly, the core network device also stores context configuration information of all terminal devices within the coverage area of the core network device. The core network device may be a Mobility Management Entity (MME). The embodiment of the disclosure is not limited thereto.

Optionally, the network node information in the connection recovery request message may be an identifier of the network node. For example, if the network node is an anchor access network device, the network node information may be information of the anchor access network device, for example, an identifier of the anchor access network device.

Optionally, the network node information in the connection recovery request message may further include an identifier of a paging region where the terminal device is located, and there is a correspondence between the paging region and the network node. Then, the access network device receives the network node information, determines the paging region where the terminal device is located and determines the network node according to the corresponding relationship between the paging region and the network node. For example, the identifier of the paging region may be a Radio Access Network (RAN) area identifier.

In the embodiment of the disclosure, the access network device receives the connection recovery request message, determines the network node according to the network node information in the connection recovery request message, and then may acquire the context configuration information of the terminal device from the network node, and the access network device may recover the connection or establish the connection with the terminal device for data transmission according to the context configuration information.

It is to be understood that the context configuration information of the terminal device may include bearer information, connection information and resource allocation related information of the terminal device and, for example, may include related information of a security key of the terminal device. The embodiment of the disclosure is not limited thereto.

Thus, according to the method for acquiring the context configuration information in the embodiment of the disclosure, the terminal device may send the connection recovery request message to any access network device in the paging region where it is located, the connection recovery request message containing the network node information and the network node indicated by the network node information storing the context configuration information of all the terminal devices within a coverage area of the network node, and then the access network device may acquire the context configuration information of the terminal device from the network node according to the network node information. Therefore, connection recovery or establishment of the access network device and the terminal device is implemented.

FIG. 2 is a schematic flowchart of a method 200 for acquiring context configuration information according to an embodiment of the disclosure. The method 200 may be executed by an access network device. As shown in FIG. 2, the method 200 includes the following steps.

In S210, the access network device receives a connection recovery request message sent by a terminal device, the connection recovery request message including network node information and the connection recovery request message being used for the terminal device to request for recovering or establishing a connection with the access network device.

In S220, the access network device determines a network node according to the network node information, the network node being used to store context configuration information of all terminal devices within coverage of the network node, the terminal device being within the coverage of the network node and the context configuration information being used for the access network device to recover or establish the connection with the terminal device.

In S230, the access network device acquires the context configuration information from the network node.

Thus, according to the method for acquiring the context configuration information in the embodiments of the disclosure, the terminal device may send the connection recovery request message to any access network device in a paging region where it is located, the connection recovery request message containing the network node information, and then the access network device may acquire the context configuration information of the terminal device from the network node according to the network node information. Therefore, connection recovery or establishment of the access network device and the terminal device is implemented.

Optionally, the network node information is an identifier of the network node.

Optionally, the network node information includes an identifier of a paging region where the terminal device is located, and the operation that the access network device determines the network node corresponding to the terminal device according to the network node information includes that: the access network device determines the network node corresponding to the paging region according to the network node information and a correspondence between the paging region and the network node.

Optionally, the network node is an anchor access network device or a core network device.

It is to be understood that the access network device in the embodiment of the disclosure corresponds to the access network device in the method 100 and may correspondingly execute the method corresponding to the access network device in the method 100. Elaborations are omitted herein.

Thus, according to the method for acquiring the context configuration information in the embodiment of the disclosure, the terminal device may send the connection recovery request message to any access network device in the paging region where it is located, the connection recovery request message containing the network node information and the network node indicated by the network node information storing the context configuration information of all the terminal devices within a coverage area of the network node, and then the access network device may acquire the context configuration information of the terminal device from the network node according to the network node information. Therefore, connection recovery or establishment of the access network device and the terminal device is implemented.

It is to be understood that, in various embodiments of the disclosure, a magnitude of a sequence number of each process does not mean an execution sequence and the execution sequence of each process should be determined by its function and an internal logic and should not form any limit to an implementation process of the embodiments of the disclosure.

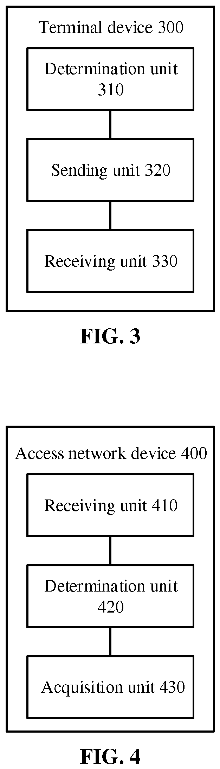

The method for acquiring the context configuration information according to the embodiments of the disclosure are described above in combination with FIG. 1 to FIG. 2 in detail. A device for acquiring context configuration information according to the embodiments of the disclosure will be described below in combination with FIG. 3 to FIG. 6 in detail.

FIG. 3 illustrates a terminal device 300 provided in an embodiment of the disclosure. The terminal device 300 includes a determination unit 310 and a sending unit 320.

The determination unit 310 is configured to determine a connection recovery request message, the connection recovery request message being used for the terminal device to request for recovering or establishing a connection with an access network device, the connection recovery request message including network node information, the network node information being used to indicate a network node, the network node storing context configuration information of all terminal devices within coverage of the network node and the terminal device being within the coverage of the network node.

The sending unit 320 is configured to send the connection recovery request message to the access network device.

Thus, the terminal device of the embodiment of the disclosure sends the connection recovery request message to any access network device in a paging region where it is located to request for recovering or establishing the connection, the connection recovery request message containing the network node information, and then the access network device may acquire the context configuration information of the terminal device from the network node according to the network node information. Therefore, connection recovery or establishment of the access network device and the terminal device is implemented.

Optionally, the network node information is an identifier of the network node.

Optionally, the network node information includes an identifier of a paging region where the terminal device is located, and there is a correspondence between the paging region and the network node.

Optionally, the terminal device 300 further includes a receiving unit 330, configured to receive the network node information sent by the network node.

Optionally, the network node is an anchor access network device or a core network device.

It is to be understood that the terminal device 300 according to the embodiment of the disclosure may correspondingly execute the method 100 in the embodiment of the disclosure and the above and other operations and/or functions of each unit in the terminal device 300 are adopted to implement the corresponding flows of the method in FIG. 1 respectively and will not be elaborated herein for simplicity.

Thus, the terminal device of the embodiment of the disclosure sends the connection recovery request message to any access network device in the paging region where it is located to request for recovering or establishing the connection, the connection recovery request message containing the network node information and the network node indicated by the network node information storing the context configuration information of all the terminal devices within a coverage area of the network node, and then the access network device may acquire the context configuration information of the terminal device from the network node according to the network node information. Therefore, connection recovery or establishment of the access network device and the terminal device is implemented.

FIG. 4 illustrates an access network device 400 provided in an embodiment of the disclosure. The access network device 400 includes a receiving unit 410, a determination unit 420 and an acquisition unit 430.

The receiving unit 410 is configured to receive a connection recovery request message sent by a terminal device, the connection recovery request message including network node information and the connection recovery request message being used for the terminal device to request for recovering or establishing a connection with the access network device.

The determination unit 420 determines a network node according to the network node information, the network node being used to store context configuration information of all terminal devices within coverage of the network node, the terminal device being within the coverage of the network node and the context configuration information being used for the access network device to recover or establish the connection with the terminal device.

The acquisition unit 430 is configured to acquire the context configuration information from the network node.

Thus, the access network device of the embodiment of the disclosure receives the connection recovery request message configured to request for recovering or establishing the connection from the terminal device, the connection recovery request message containing the network node information and the network node indicated by the network node information storing the context configuration information of all the terminal devices within the coverage of the network node, and then the access network device may acquire the context configuration information of the terminal device from the network node according to the network node information. Therefore, connection recovery or establishment of the access network device and the terminal device is implemented.

Optionally, the network node information is an identifier of the network node.

Optionally, the network node information includes an identifier of a paging region where the terminal device is located, and the determination unit 420 is specifically configured to determine the network node corresponding to the paging region according to the network node information and a correspondence between the paging region and the network node.

Optionally, the network node is an anchor access network device or a core network device.

It is to be understood that the access network device 400 according to the embodiment of the disclosure may correspondingly execute the method 200 in the embodiment of the disclosure and the above and other operations and/or functions of each unit in the access network device 400 are adopted to implement the corresponding flows of the method in FIG. 2 respectively and will not be elaborated herein for simplicity.

Thus, the access network device of the embodiment of the disclosure receives the connection recovery request message configured to request for recovering or establishing the connection from the terminal device, the connection recovery request message containing the network node information and the network node indicated by the network node information storing the context configuration information of all the terminal devices within a coverage area of the network node, and then the access network device may acquire the context configuration information of the terminal device from the network node according to the network node information. Therefore, connection recovery or establishment of the access network device and the terminal device is implemented.

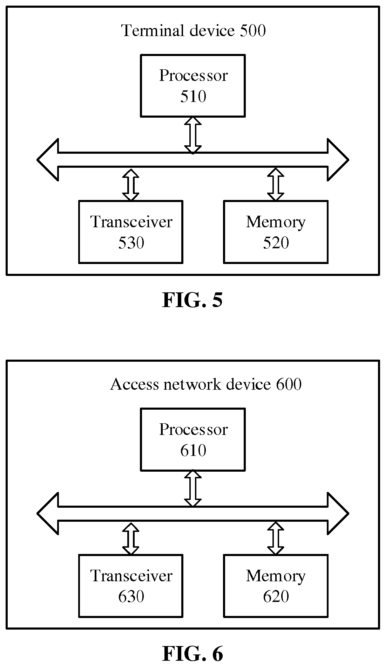

FIG. 5 is a schematic block diagram of a terminal device 500 according to an embodiment of the disclosure. As shown in FIG. 5, the terminal device 500 includes: a processor 510 and a transceiver 520. The processor 510 is connected with the transceiver 520. Optionally, the terminal device 500 further includes a memory 530. The memory 530 is connected with the processor 510. The processor 510, the memory 530 and the transceiver 520 communicate with one another to transmit control and/or data signals through an internal connecting path. The memory 530 may be configured to store an instruction. The processor 510 is configured to execute the instruction stored in the memory 530 to control the transceiver 520 to send information or signals. The processor 510 is configured to determine a connection recovery request message, the connection recovery request message being used for the terminal device to request for recovering or establishing a connection with an access network device, the connection recovery request message including network node information, the network node information being used to indicate a network node, the network node storing context configuration information of all terminal devices within coverage of the network node and the terminal device being within the coverage of the network node. The transceiver 520 is configured to send the connection recovery request message to the access network device.

Thus, the terminal device of the embodiment of the disclosure sends the connection recovery request message to any access network device in a paging region where it is located to request for recovering or establishing the connection, the connection recovery request message containing the network node information, and then the access network device may acquire the context configuration information of the terminal device from the network node according to the network node information. Therefore, connection recovery or establishment of the access network device and the terminal device is implemented.

Optionally, the network node information is an identifier of the network node.

Optionally, the network node information includes an identifier of a paging region where the terminal device is located, and there is a correspondence between the paging region and the network node.

Optionally, the transceiver 520 is configured to receive the network node information sent by the network node.

Optionally, the network node is an anchor access network device or a core network device.

It is to be understood that the terminal device 500 according to the embodiment of the disclosure may correspond to the terminal device 300 in the embodiment of the disclosure and may correspond to a corresponding body executing the method 100 according to the embodiment of the disclosure and the above and other operations and/or functions of each unit in the terminal device 500 are adopted to implement the corresponding flows of the terminal device in each method in FIG. 1 respectively and will not be elaborated herein for simplicity.

Thus, the terminal device of the embodiment of the disclosure sends the connection recovery request message to any access network device in the paging region where it is located to request for recovering or establishing the connection, the connection recovery request message containing the network node information and the network node indicated by the network node information storing the context configuration information of all the terminal devices within a coverage area of the network node, and then the access network device may acquire the context configuration information of the terminal device from the network node according to the network node information. Therefore, connection recovery or establishment of the access network device and the terminal device is implemented.

FIG. 6 is a schematic block diagram of an access network device 600 according to an embodiment of the disclosure. As shown in FIG. 6, the access network device 600 includes: a processor 610 and a transceiver 620. The processor 610 is connected with the transceiver 620. Optionally, the access network device 600 further includes a memory 630. The memory 630 is connected with the processor 610.

The processor 610, the memory 630 and the transceiver 620 communicate with one another to transmit control and/or data signals through an internal connecting path. The memory 630 may be configured to store an instruction. The transceiver 620 is configured to receive a connection recovery request message sent by a terminal device, the connection recovery request message including network node information and the connection recovery request message being used for the terminal device to request for recovering or establishing a connection with the access network device. The processor 610 is configured to determine a network node according to the network node information, the network node being used to store context configuration information of all terminal devices within coverage of the network node, the terminal device being within the coverage of the network node and the context configuration information being used for the access network device to recover or establish the connection with the terminal device. The transceiver 620 is further configured to acquire the context configuration information from the network node.

Thus, the access network device of the embodiment of the disclosure receives the connection recovery request message configured to request for recovering or establishing the connection from the terminal device, the connection recovery request message containing the network node information and the network node indicated by the network node information storing the context configuration information of all the terminal devices within the coverage of the network node, and then the access network device may acquire the context configuration information of the terminal device from the network node according to the network node information. Therefore, connection recovery or establishment of the access network device and the terminal device is implemented.

Optionally, the network node information is an identifier of the network node.

Optionally, the network node information includes an identifier of a paging region where the terminal device is located, and the processor 610 is configured to determine the network node corresponding to the paging region according to the network node information and a correspondence between the paging region and the network node.

Optionally, the network node is an anchor access network device or a core network device.

It is to be understood that the access network device 600 according to the embodiment of the disclosure may correspond to the access network device 400 in the embodiment of the disclosure and may correspond to a corresponding body executing the method 200 according to the embodiment of the disclosure and the above and other operations and/or functions of each unit in the access network device 600 are adopted to implement the corresponding flows of the access network device in each method in FIG. 2 respectively and will not be elaborated herein for simplicity.

Thus, the access network device of the embodiment of the disclosure receives the connection recovery request message configured to request for recovering or establishing the connection from the terminal device, the connection recovery request message containing the network node information and the network node indicated by the network node information storing the context configuration information of all the terminal devices within a coverage area of the network node, and then the access network device may acquire the context configuration information of the terminal device from the network node according to the network node information. Therefore, connection recovery or establishment of the access network device and the terminal device is implemented.

It is to be understood that the processor in the embodiment of the disclosure may be an integrated circuit chip and has a signal processing capability. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The universal processor may be a microprocessor or the processor may also be any conventional processor and the like.

The memory in the embodiment of the disclosure may be a volatile memory or a nonvolatile memory, or may include both the volatile and nonvolatile memories. The nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The above storage medium includes: various media capable of storing program codes such as a U disk, a mobile hard disk, a ROM, a RAM, a magnetic disk or an optical disk.

The above is only the specific implementation of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for acquiring context configuration information, comprising:
determining (S110), by a terminal device, a connection recovery request message, the connection recovery request message being used for the terminal device to request for recovering or establishing a connection with an access network device, the connection recovery request message comprising network node information, the network node information being used to indicate a network node, the network node being an anchor access network device or a core network device, the network node storing context configuration information of all terminal devices within coverage of the network node, and the terminal device being within the coverage of the network node; and
sending (S120), by the terminal device, the connection recovery request message to the access network device; wherein the access network device is in the paging region where the terminal resides, the paging region is a paging region pre-configured for the terminal device by a core network device, the paging region includes one or more access network devices, one of the one or more access network devices is an anchor access network device, and the anchor access network device stores context configuration information of all the terminal devices in the paging region.

2. The method of claim 1, wherein the network node information is an identifier of the network node.

3. The method of claim 1, wherein the network node information comprises an identifier of a paging region where the terminal device is located, and there is a correspondence between the paging region and the network node.

4. The method of any one of claims 1-3, further comprising:
receiving, by the terminal device, the network node information sent by the network node.

5. A method for acquiring context configuration information, comprising:
receiving (S210), by an access network device, a connection recovery request message sent by a terminal device, the connection recovery request message comprising network node information, and the connection recovery request message being used for the terminal device to request for recovering or establishing a connection with the access network device; wherein the access network device is in the paging region where the terminal resides, the paging region is a paging region pre-configured for the terminal device by a core network device, the paging region includes one or more access network devices, one of the one or more access network devices is an anchor access network device, and the anchor access network device stores context configuration information of all the terminal devices in the paging region;
determining (S220), by the access network device, a network node according to the network node information, the network node being used to store context configuration information of all terminal devices within coverage of the network node, the network node being an anchor access network device or a core network device, the terminal device being within the coverage of the network node, and the context configuration information being used for the access network device to recover or establish the connection with the terminal device; and
acquiring (S230), by the access network device, the context configuration information from the network node.

6. The method of claim 5, wherein the network node information is an identifier of the network node.

7. The method of claim 5, wherein the network node information comprises an identifier of a paging region where the terminal device is located, and
determining, by the access network device, the network node according to the network node information comprises:
determining, by the access network device, the network node corresponding to the paging region according to the network node information and a correspondence between the paging region and the network node.

8. A terminal device, comprising:
a determination unit (310), configured to determine a connection recovery request message, the connection recovery request message being used for the terminal device to request for recovering or establishing a connection with an access network device, the connection recovery request message comprising network node information, the network node information being used to indicate a network node, the network node being an anchor access network device or a core network device, the network node storing context configuration information of all terminal devices within coverage of the network node, and the terminal device being within the coverage of the network node; and
a sending unit (320), configured to send the connection recovery request message to the access network device; wherein the access network device is in the paging region where the terminal resides, the paging region is a paging region pre-configured for the terminal device by a core network device, the paging region includes one or more access network devices, one of the one or more access network devices is an anchor access network device, and the anchor access network device stores context configuration information of all the terminal devices in the paging region.

9. The terminal device of claim 8, wherein the network node information is an identifier of the network node.

10. The terminal device of claim 8, wherein the network node information comprises an identifier of a paging region where the terminal device is located, and there is a correspondence between the paging region and the network node.

11. The terminal device of any one of claims 8-10, further comprising:
a receiving unit (330), configured to receive the network node information sent by the network node.

12. An access network device, configured to implement the method of any one of claims 5-7.

## Patentansprüche

1. Verfahren zum Erfassen von Kontextauslegungsinformationen, das Folgendes umfasst:
Bestimmen (S110) einer Verbindungswiederherstellungsanforderungsnachricht durch eine Endgerätevorrichtung, wobei die Verbindungswiederherstellungsanforderungsnachricht von der Endgerätevorrichtung verwendet wird, um das Wiederherstellen oder Aufbauen einer Verbindung mit einer Zugangsnetzwerkvorrichtung anzufordern, wobei die Verbindungswiederherstellungsanforderungsnachricht Netzwerkknoteninformationen umfasst, wobei die Netzwerkknoteninformationen verwendet werden, um einen Netzwerkknoten anzuzeigen, wobei der Netzwerkknoten eine Ankerzugangsnetzwerkvorrichtung oder eine Kernnetzwerkvorrichtung ist, wobei der Netzwerkknoten Kontextauslegungsinformationen von allen Endgerätevorrichtungen innerhalb der Abdeckung des Netzwerkknotens speichert und wobei sich die Endgerätevorrichtung innerhalb der Abdeckung des Netzwerkknotens befindet; und
Senden (S120) der Verbindungswiederherstellungsanforderungsnachricht durch die Endgerätevorrichtung an die Zugangsnetzwerkvorrichtung; wobei die Zugangsnetzwerkvorrichtung in der Pagingregion ist, in der sich das Endgerät befindet, wobei die Pagingregion eine Pagingregion ist, die von einer Kernnetzwerkvorrichtung für die Endgerätevorrichtung vorausgelegt ist, wobei die Pagingregion eine oder mehrere Zugangsnetzwerkvorrichtungen beinhaltet, eine der einen oder der mehreren Zugangsnetzwerkvorrichtungen eine Ankerzugangsnetzwerkvorrichtung ist und die Ankerzugangsnetzwerkvorrichtung Kontextauslegungsinformationen von allen Endgerätevorrichtungen in der Pagingregion speichert.

2. Verfahren nach Anspruch 1, wobei die Netzwerkknoteninformationen eine Kennung des Netzwerkknotens sind.

3. Verfahren nach Anspruch 1, wobei die Netzwerkknoteninformationen eine Kennung einer Pagingregion umfassen, in der sich die Endgerätevorrichtung befindet, und zwischen der Pagingregion und dem Netzwerkknoten eine Entsprechung besteht.

4. Verfahren nach einem der Ansprüche 1-3, das ferner Folgendes umfasst:
Empfangen der Netzwerkknoteninformationen, die vom Netzwerkknoten gesendet werden, durch die Endgerätevorrichtung.

5. Verfahren zum Erfassen von Kontextauslegungsinformationen, das Folgendes umfasst:
Empfangen (S210) einer Verbindungswiederherstellungsanforderungsnachricht, die von einer Endgerätevorrichtung gesendet wird, durch eine Zugangsnetzwerkvorrichtung, wobei die Verbindungswiederherstellungsanforderungsnachricht Netzwerkknoteninformationen umfasst und die Verbindungswiederherstellungsanforderungsnachricht von der Endgerätevorrichtung verwendet wird, um das Wiederherstellen oder Aufbauen einer Verbindung mit der Zugangsnetzwerkvorrichtung anzufordern; wobei die Zugangsnetzwerkvorrichtung in der Pagingregion ist, in der sich das Endgerät befindet, wobei die Pagingregion eine Pagingregion ist, die von einer Kernnetzwerkvorrichtung für die Endgerätevorrichtung vorausgelegt ist, wobei die Pagingregion eine oder mehrere Zugangsnetzwerkvorrichtungen beinhaltet, eine der einen oder der mehreren Zugangsnetzwerkvorrichtungen eine Ankerzugangsnetzwerkvorrichtung ist und die Ankerzugangsnetzwerkvorrichtung Kontextauslegungsinformationen von allen Endgerätevorrichtungen in der Pagingregion speichert;
Bestimmen (S220) eines Netzwerkknotens durch die Zugangsnetzwerkvorrichtung gemäß den Netzwerkknoteninformationen, wobei der Netzwerkknoten verwendet wird, um Kontextauslegungsinformationen von allen Endgerätevorrichtungen innerhalb der Abdeckung des Netzwerkknotens zu speichern, wobei der Netzwerkknoten eine Ankerzugangsnetzwerkvorrichtung oder eine Kernnetzwerkvorrichtung ist, wobei sich die Endgerätevorrichtung innerhalb der Abdeckung des Netzwerkknotens befindet und wobei die Kontextauslegungsinformationen von der Zugangsnetzwerkvorrichtung verwendet werden, um die Verbindung mit der Endgerätevorrichtung wiederherzustellen oder aufzubauen; und
Erfassen (S230) der Kontextauslegungsinformationen vom Netzwerkknoten durch die Zugangsnetzwerkvorrichtung.

6. Verfahren nach Anspruch 5, wobei die Netzwerkknoteninformationen eine Kennung des Netzwerkknotens sind.

7. Verfahren nach Anspruch 5, wobei die Netzwerkknoteninformationen eine Kennung einer Pagingregion umfassen, in der sich die Endgerätevorrichtung befindet, und
das Bestimmen des Netzwerkknotens gemäß den Netzwerkknoteninformationen durch die Zugangsnetzwerkvorrichtung Folgendes umfasst:
Bestimmen des Netzwerkknotens, der der Pagingregion entspricht, gemäß den Netzwerkknoteninformationen und einer Entsprechung zwischen der Pagingregion und dem Netzwerkknoten durch die Zugangsnetzwerkvorrichtung.

8. Endgerätevorrichtung, die Folgendes umfasst:
eine Bestimmungseinheit (310), die dazu ausgelegt ist, eine Verbindungswiederherstellungsanforderungsnachricht zu bestimmen, wobei die Verbindungswiederherstellungsanforderungsnachricht von der Endgerätevorrichtung verwendet wird, um das Wiederherstellen oder Aufbauen einer Verbindung mit einer Zugangsnetzwerkvorrichtung anzufordern, wobei die Verbindungswiederherstellungsanforderungsnachricht Netzwerkknoteninformationen umfasst, wobei die Netzwerkknoteninformationen verwendet werden, um einen Netzwerkknoten anzuzeigen, wobei der Netzwerkknoten eine Ankerzugangsnetzwerkvorrichtung oder eine Kernnetzwerkvorrichtung ist, wobei der Netzwerkknoten Kontextauslegungsinformationen von allen Endgerätevorrichtungen innerhalb der Abdeckung des Netzwerkknotens speichert und wobei sich die Endgerätevorrichtung innerhalb der Abdeckung des Netzwerkknotens befindet; und
eine Sendeeinheit (320), die dazu ausgelegt ist, die Verbindungswiederherstellungsanforderungsnachricht an die Zugangsnetzwerkvorrichtung zu senden; wobei die Zugangsnetzwerkvorrichtung in der Pagingregion ist, in der sich das Endgerät befindet, wobei die Pagingregion eine Pagingregion ist, die von einer Kernnetzwerkvorrichtung für die Endgerätevorrichtung vorausgelegt ist, wobei die Pagingregion eine oder mehrere Zugangsnetzwerkvorrichtungen beinhaltet, eine der einen oder der mehreren Zugangsnetzwerkvorrichtungen eine Ankerzugangsnetzwerkvorrichtung ist und die Ankerzugangsnetzwerkvorrichtung Kontextauslegungsinformationen von allen Endgerätevorrichtungen in der Pagingregion speichert.

9. Endgerätevorrichtung nach Anspruch 8, wobei die Netzwerkknoteninformationen eine Kennung des Netzwerkknotens sind.

10. Endgerätevorrichtung nach Anspruch 8, wobei die Netzwerkknoteninformationen eine Kennung einer Pagingregion umfassen, in der sich die Endgerätevorrichtung befindet, und zwischen der Pagingregion und dem Netzwerkknoten eine Entsprechung besteht.

11. Endgerätevorrichtung nach einem der Ansprüche 8-10, die ferner Folgendes umfasst:
eine Empfangseinheit (330), die dazu ausgelegt ist, die Netzwerkknoteninformationen, die vom Netzwerkknoten gesendet werden, zu empfangen.

12. Zugangsnetzwerkvorrichtung, die dazu ausgelegt ist, das Verfahren nach einem der Ansprüche 5-7 zu implementieren.

## Revendications

1. Procédé d'acquisition d'informations de configuration contextuelles, comprenant les étapes consistant à :
déterminer (S110), par un dispositif terminal, un message de demande de rétablissement de connexion, le message de demande de rétablissement de connexion étant utilisé par le dispositif terminal pour demander de rétablir ou d'établir une connexion avec un dispositif de réseau d'accès, le message de demande de rétablissement de connexion comprenant une information de nœud de réseau, l'information de nœud de réseau étant utilisée pour indiquer un nœud de réseau, le nœud de réseau étant un dispositif de réseau d'accès d'ancrage ou un dispositif de réseau central, le nœud de réseau stockant des informations de configuration contextuelles de tous les dispositifs terminaux dans les limites d'une couverture du nœud de réseau, et le dispositif terminal étant dans les limites de la couverture du nœud de réseau ; et
envoyer (S120), par le dispositif terminal, le message de demande de rétablissement de connexion au dispositif de réseau d'accès ; le dispositif de réseau d'accès étant dans la région de radiorecherche où se trouve le terminal, la région de radiorecherche étant une région de radiorecherche préconfigurée pour le dispositif terminal par un dispositif de réseau central, la région de radiorecherche incluant un ou plusieurs dispositifs de réseau d'accès, un du ou des dispositifs de réseau d'accès étant un dispositif de réseau d'accès d'ancrage, et le dispositif de réseau d'accès d'ancrage stockant des informations de configuration contextuelles de tous les dispositifs terminaux dans la région de radiorecherche.

2. Procédé selon la revendication 1, dans lequel l'information de nœud de réseau est un identifiant du nœud de réseau.

3. Procédé selon la revendication 1, dans lequel l'information de nœud de réseau comprend un identifiant d'une région de radiorecherche où se trouve le dispositif terminal, une correspondance existant entre la région de radiorecherche et le nœud de réseau.

4. Procédé selon l'une quelconque des revendications 1 à 3, comprenant en outre l'étape consistant à :
recevoir, par le dispositif terminal, l'information de nœud de réseau envoyée par le nœud de réseau.

5. Procédé d'acquisition d'informations de configuration contextuelles, comprenant les étapes consistant à :
recevoir (S210), par un dispositif de réseau d'accès, un message de demande de rétablissement de connexion envoyé par un dispositif terminal, le message de demande de rétablissement de connexion comprenant une information de nœud de réseau, et le message de demande de rétablissement de connexion étant utilisé par le dispositif terminal pour demander de rétablir ou d'établir une connexion avec un dispositif de réseau d'accès ; le dispositif de réseau d'accès étant dans la région de radiorecherche où se trouve le terminal, la région de radiorecherche étant une région de radiorecherche préconfigurée pour le dispositif terminal par un dispositif de réseau central, la région de radiorecherche incluant un ou plusieurs dispositifs de réseau d'accès, un du ou des dispositifs de réseau d'accès étant un dispositif de réseau d'accès d'ancrage, et le dispositif de réseau d'accès d'ancrage stockant des informations de configuration contextuelles de tous les dispositifs terminaux dans la région de radiorecherche ;
déterminer (S220), par le dispositif de réseau d'accès, un nœud de réseau selon l'information de nœud de réseau, le nœud de réseau étant utilisé pour stocker des informations de configuration contextuelles de tous les dispositifs terminaux dans les limites d'une couverture du nœud de réseau, le nœud de réseau étant un dispositif de réseau d'accès d'ancrage ou un dispositif de réseau central, le dispositif terminal étant dans les limites de la couverture du nœud de réseau, et les informations de configuration contextuelles étant utilisées par le dispositif de réseau d'accès pour rétablir ou établir la connexion avec le dispositif terminal ; et
acquérir (S230), par le dispositif de réseau d'accès, les informations de configuration contextuelles auprès du nœud de réseau.

6. Procédé selon la revendication 5, dans lequel l'information de nœud de réseau est un identifiant du nœud de réseau.

7. Procédé selon la revendication 5, dans lequel l'information de nœud de réseau comprend un identifiant d'une région de radiorecherche où se trouve le dispositif terminal, et
la détermination, par le dispositif de réseau d'accès, du nœud de réseau selon l'information de nœud de réseau comprend l'étape consistant à :
déterminer, par le dispositif de réseau d'accès, le nœud de réseau qui correspond à la région de radiorecherche selon l'information de nœud de réseau et une correspondance entre la région de radiorecherche et le nœud de réseau.

8. Dispositif terminal, comprenant :
une unité de détermination (310), configurée pour déterminer un message de demande de rétablissement de connexion, le message de demande de rétablissement de connexion étant utilisé par le dispositif terminal pour demander de rétablir ou d'établir une connexion avec un dispositif de réseau d'accès, le message de demande de rétablissement de connexion comprenant une information de nœud de réseau, l'information de nœud de réseau étant utilisée pour indiquer un nœud de réseau, le nœud de réseau étant un dispositif de réseau d'accès d'ancrage ou un dispositif de réseau central, le nœud de réseau stockant des informations de configuration contextuelles de tous les dispositifs terminaux dans les limites d'une couverture du nœud de réseau, et le dispositif terminal étant dans les limites de la couverture du nœud de réseau ;
et
une unité d'envoi (320), configurée pour envoyer le message de demande de rétablissement de connexion au dispositif de réseau d'accès ; le dispositif de réseau d'accès étant dans la région de radiorecherche où se trouve le terminal, la région de radiorecherche étant une région de radiorecherche préconfigurée pour le dispositif terminal par un dispositif de réseau central, la région de radiorecherche incluant un ou plusieurs dispositifs de réseau d'accès, un du ou des dispositifs de réseau d'accès étant un dispositif de réseau d'accès d'ancrage, et le dispositif de réseau d'accès d'ancrage stockant des informations de configuration contextuelles de tous les dispositifs terminaux dans la région de radiorecherche.

9. Dispositif terminal selon la revendication 8, dans lequel l'information de nœud de réseau est un identifiant du nœud de réseau.

10. Dispositif terminal selon la revendication 8, dans lequel l'information de nœud de réseau comprend un identifiant d'une région de radiorecherche où se trouve le dispositif terminal, une correspondance existant entre la région de radiorecherche et le nœud de réseau.

11. Dispositif terminal selon l'une quelconque des revendications 8 à 10, comprenant en outre :
une unité de réception (330), configurée pour recevoir l'information de nœud de réseau envoyée par le nœud de réseau.

12. Dispositif de réseau d'accès, configuré pour mettre en œuvre le procédé selon l'une quelconque des revendications 5 à 7.
